# EUROPEAN PATENT APPLICATION

(11) **EP 1 391 360 A2**
(43) Date of publication of application: **25.02.2004**
(21) Application number: 03255249.9
(22) Date of filing: 22.08.2003
(51) Int. Cl.: B60S 1/04

(54) **Wiper blade proctector**

(30) Priority: 23.08.2002 GB 0219678
(71) Applicant: TRICO LIMITED, Gwent, NP4 0XZ (GB)
(72) Inventor: Hart, Tony Connor, Hengoed, Mid Glamorgan CF28 7PY (GB); Dancer, Nigel, Abergavenny, Gwent NP7 6LZ (GB)
(74) Representative: Britter, Keith Palmer

(57) **Abstract**

A protector (1) for a windscreen wiper blade rubber comprises a sleeve (11) having an internal passageway for receiving at least part of a windscreen wiper blade rubber projecting from the associated wiper blade harness, the sleeve (11) being formed with a slot (2) arranged to slide over a neck portion of the windscreen wiper blade rubber and having a rubber flap (4) projecting from the sleeve (11), to act as a temporary wiper strip, wherein projections (6, 7) extending along the length of the exterior of the protector (1) define axially-extending pockets (8).

## Description

This invention relates to a wiper blade protector.

It is common practice to provide a protector for the rubber of a windscreen wiper blade for a new vehicle whilst it is being transported for delivery or awaiting sale by a distributor in a compound. The protector is usually in the form of a sleeve which can be slid over the projecting part of the wiper blade rubber, thereby helping to prevent the rubber from becoming set into a particular shape where it rests against the vehicle windscreen. The sleeve usually has a flexible flap which acts as a temporary wiper strip, should the vehicle wiper system be operated.

A problem associated with this known type of wiper blade protector is that dust and other particles can collect on or in the region of the flexible flap of the protector, which can cause damage, such as scratching, to the vehicle windscreen, should the wiper system be operated.

Also, this known type of wiper blade protector tends to be made of a fairly flexible material which does not provide sufficient stiffening for the wiper rubber and, hence, a lesser degree of protection.

It is an object of the present invention to provide a wiper blade protector which overcomes, or at least substantially reduces, these disadvantages associated with the known type of protector discussed above.

Accordingly, there is provided a protector for a windscreen wiper blade rubber, comprising a sleeve having an internal passageway for receiving at least part of a windscreen wiper blade rubber projecting from the associated wiper blade harness, the sleeve being formed with a slot arranged to slide over a neck portion of the windscreen wiper blade rubber and having a rubber flap projecting from the sleeve, to act as a temporary wiper strip, wherein projections extending along the length of the exterior of the protector define axially-extending pockets.

Preferably, the projections extend axially along the length of the exterior of the sleeve of the protector. In any event, such pockets can act as dust traps to reduce the possibility that dust will scratch the vehicle windscreen, should the vehicle wiper system be operated. Indeed, the axially-extending projections can also provide a degree of stiffening for the wiper rubber and provide greater wiper protection.

The sleeve of the protector may be of any suitable material, preferably a stiff plastics material. The slot in the sleeve of the protector may be located at one edge thereof, with the rubber flap projecting from the opposed edge thereof, in which case, the rubber material of the flap may extend as a coating beyond that opposed edge and on to the external surface of the adjacent region of each side wall of the sleeve. Such a coating may provide a degree of protection for the sleeve but can also create a better anchorage for the flap projecting therefrom.

However, it is preferred to secure the rubber flap to the sleeve by thermal bonding during extrusion of the protector, because the differential expansion and contraction of the opposed sides of the coating during the extrusion process can cause twisting of the protector, particularly when joined pairs of protectors are extruded simultaneously.

Although the protector can be extruded or otherwise formed as a unitary structure, the sleeve and rubber flap of the protector can be made separately as preformed components and then subsequently joined together.

Part of the sleeve at one end thereof may be moulded or punched inwardly to define a stop, such that, when the sleeve of the protector is slid on to a windscreen wiper rubber, it will be held from further movement at one end and, therefore, will not tend to slide off accidentally, should the associated vehicle wiper system be put in to operation.

In order that the invention may be more fully understood, embodiments of wiper blade protector will now be described by way of example and with reference to the accompanying drawings in which:
Figure 1 is a perspective view of a first embodiment of windscreen wiper blade protector;
Figure 2 is a cross-section of the protector shown in Figure 1;
Figure 3 is a cross-section along the line III-III through a modified structure for the protector shown in Figures 1 and 2;
Figure 4 is a cross-section of second embodiment of windscreen wiper blade protector; and
Figure 5 is a cross-section of a third embodiment of windscreen wiper blade protector.

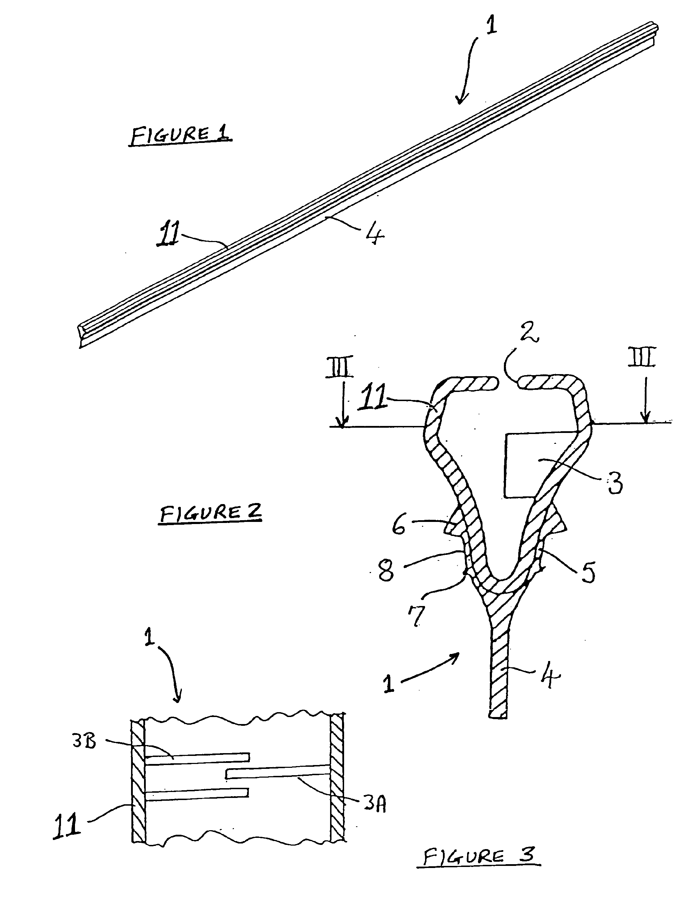

Referring firstly to Figures 1 and 2 of the accompanying drawings, a windscreen wiper blade protector, indicated generally at 1, comprises a stiff, extruded plastics sleeve 11 which can be slid over the existing wiper rubber of a windscreen wiper blade (not shown), so as to protect that rubber against damage or from becoming set.

The sleeve 11 is, in this embodiment, shaped approximately to the cross-section of the wiper blade rubber and has a slot 2 which can be slid over the neck portion of the wiper rubber (also not shown), when the protector 1 is slid into place.

An indented portion 3, at one end of the sleeve 11 acts as a stop for limiting movement of the sleeve 11, once it is fully in position upon the wiper rubber.

As a modification, a pair of indents 3B can be formed on one side of the interior of the sleeve 11, to overlap with a single indent 3A on the opposite side, in a sandwich arrangement, as shown in Figure 3.

This interlocking arrangement enables a sturdy stop to be provided but with smaller indents than the single indent 3 of Figure 2, thus reducing stress on the side walls of the sleeve 11 of the protector 1. Indeed, there could be just one indent 3B on one side of the sleeve 11, to overlap with the indent 3A in a more simplified arrangement.

The sleeve 11 is extruded from a polypropylene material to a stiffness to resist undue bowing and twisting during both manufacture and use. A rubber flap 4 is moulded on to the narrower section of the sleeve 11, to act as a temporary wiper strip.

As shown at 5 in Figure 2, the rubber material of the flap 4 extends up the adjacent portions of the exterior of the side walls of the sleeve 11, to provide a degree of protection for the sleeve 11 and, also, to prevent the sleeve 11 from coming in to contact with the associated vehicle windscreen.

The extended coating 5, which is co-extruded with the sleeve 11 at the same time as the flap 4, assists in anchoring the flap 4 securely to the sleeve 11.

Outwardly extending projections 6 and 7 are formed along the exterior of the sides of the coating 5, to define pockets 8 which provide greater wiper protection and, also, trap dust which might otherwise scratch a windscreen surface, should the wiper blades of the associated vehicle be operated with the protector in place.

The larger projections 6 are shaped such that they provide a contact point with the associated vehicle windscreen as the regular wiper blade bends over during a wiping operation, rather than allowing the sleeve 11 to contact the windscreen.

Further, the projections 7 could be provided in the region leading to projections 6, to create a series of pockets 8 and the size and shape of the projections 6 and 7 could be varied as desired to suit the size and profile of the wiper rubber on to which the protector 1 is fitted.

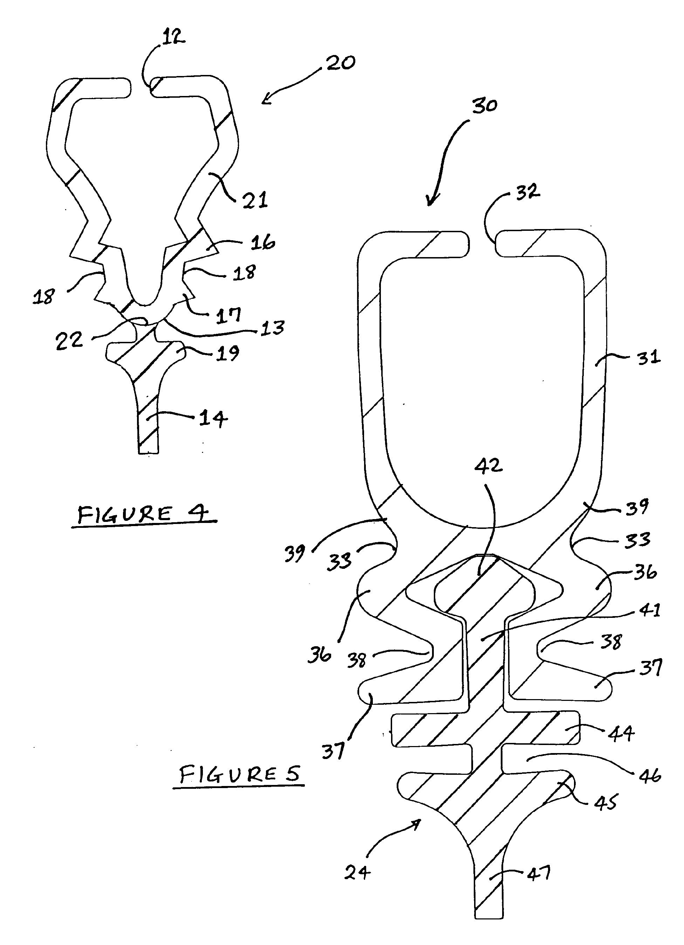

Referring now to Figure 4 of the accompanying drawings, a second embodiment of windscreen wiper blade protector 20 is shown in section and comprises, as in the case of the first embodiment described above, a sleeve 21 whose interior is shaped to complement at least partially a wiper blade to which the protector 20 is to be fitted slidably. For that purpose, a slot 12 is provided at one edge of the sleeve 21.

Again, the sleeve 21 is extruded from a stiff plastics material, such a polypropylene material, with a flap 14 being heat bonded thereto, at 22, as the extruded sleeve 21 and flap 14 are brought into engagement with each other downstream of the respective extruder dies.

Projections 16 and 17 extend outwardly of the sleeve 21 in the region thereof adjacent the rubber flap 14, such projections extending the length of the sleeve 21 on both sides thereof.

In this manner, a pair of opposed, axially-extending pockets 18 are provided for trapping dust and other particles which might otherwise cause damage to the associated vehicle windscreen, should the vehicle wiper system be operated with the protector 20 in place.

The rubber flap 14 is provided with a pair of opposed, axially-extending flanges 19 which can improve the wiping action of the flap 14 and, under certain circumstances, combine with the respective projections 17 to define other dirt-collecting pockets 13.

The embodiments discussed above in relation to Figures 1 to 3 and Figure 4 of the accompanying drawings are manufactured as unitary structures.

However, the third embodiment of windscreen wiper blade protector, as shown generally at 30 in Figure 5, comprises two separately manufactured, preformed components, namely, the stiff plastics sleeve 31 and the rubber flap indicated generally at 24.

Again, the sleeve 31 is provided with an axially-extending slot 32 for engaging with a neck of a corresponding part of the regular wiper blade (not shown). However, the interior channel of the sleeve 31 is not necessarily shaped to complement at least part of the cross-section of the blade.

Also, pairs of opposed, outwardly-extending projections 36 and 37 are provided in the region of the sleeve 31 adjacent the flap 24, to define opposed pockets 38 extending axially along respective sides of the protector 30.

As in the case of the two previous embodiments of protector 1, 20 described above, these pockets 38 trap dust and other particles which might otherwise cause damage to an associated vehicle windscreen, should the vehicle wiper system be actuated.

Further, the projections 36 may be arranged to act in concert with the curved portion 39 of the sleeve 31, to provide additional dirt-trapping pockets 33.

Between the projections 36 and 37 of the sleeve 31 is provided a generally T-shaped slot which is shaped to complement a stem 41 of the extruded rubber flap 24.

That stem 41 has an enlarged head 42 engaging within a complementary-shaped recess forming the cross bar of the T-shaped slot, to retain the flap 24 and sleeve 31 firmly together. However, the flaps 24 and sleeve 31 may be slidably connected together and the flaps 24 may be replaceable.

Also, the flap 24 has two pairs of opposed flanges 44, 45 which tend to enhance operation of the flap portion 47 of the flap 24, should the associated wiper system be operated.

Also, each pair of opposed flanges 44, 45 define therebetween opposed pockets 46 which can also act as dust traps.

By heat staking each end of the protector 30 when fitted to the wiper blade rubber, the protector 30 is prevented from sliding off the rubber accidentally, whilst also heat bonding the flap 24 to the sleeve 31 at the juncture between those two components 24, 31.

It is to be understood that the term "rubber" as used in this specification, is intended to embrace not only conventional or natural rubber materials but also various types of synthetic rubber materials which are used commonly to allow the wiping surface of a windscreen wiper blade to bend over during a wiping operation, rather than allowing part of the protector sleeve 1, 21, 31 in the region of the slot 2, 12, 32 from contacting the windscreen and causing damage thereto.

## Claims

1. A protector (1, 20, 30) for a windscreen wiper blade rubber, comprising a sleeve (11, 21, 31) having an internal passageway for receiving at least part of a windscreen wiper blade rubber projecting from the associated wiper blade harness, the sleeve (11, 21, 31) being formed with a slot (2, 12, 32) arranged to slide over a neck portion of the windscreen wiper blade rubber and having a rubber flap (4, 14, 24) projecting from the sleeve (11, 21, 31) to act as a temporary wiper strip, wherein projections (6, 7; 16, 17; 36, 37) extending along the length of the exterior of the protector (1, 20, 30) define axially-extending pockets (8, 18, 38).

2. A protector (1, 20, 30) according to claim 1, wherein the projections (6, 7; 16, 17; 36, 37) extend axially along the length of the exterior of the sleeve (11, 21, 31) of the protector (1, 20, 30).

3. A protector (1, 20, 30) according to claim 1 or 2, wherein the sleeve (11, 21, 31) is of a stiff plastics material.

4. A protector (1, 20, 30) according to claim 1, 2 or 3, wherein the slot (2, 12, 32) in the sleeve (11, 21, 31) is located at one edge thereof, with the rubber flap (4, 14, 24) projecting from the opposed edge thereof.

5. A protector (1, 20, 30) as claimed in any preceding claim, wherein the rubber material of the flap (4, 14, 24) extends as a coating beyond that opposed edge and on to the external surface of the adjacent region of each side wall of the sleeve (11, 21, 31).

6. A protector (1, 20, 30) according to any preceding claim, wherein the rubber flap (4, 14, 24) is secured to the sleeve (11, 21, 31) by bonding, preferably thermal bonding.

7. A protector (1, 20, 30) according to any preceding claim, when provided as a unitary structure.

8. A protector (1, 20, 30) according to any of claims 1 to 6, wherein the sleeve (11, 21, 31) and rubber flap (4, 14, 24) have been made separately as preformed components and then subsequently secured together, preferably detachably.

9. A protector (1, 20, 30) according to claim 8, wherein the sleeve (11, 21, 31) and rubber flap (4, 14, 24) are slidably secured together.

10. A protector (1, 20, 30) according to any preceding claim, wherein part of the sleeve (11, 21, 31) at one end thereof is moulded or punched inwardly to define a stop (3), such that and in use, when the sleeve (11, 21, 31) of the protector (1, 20, 30) is slid on to a windscreen wiper rubber, it will be held from further movement at one end.
